# FASCICULE DE BREVET EUROPEEN

(11) **EP 0 493 238 B1**
(45) Date de publication et mention de la délivrance du brevet: **14.06.1995**
(21) Numéro de dépôt: 91403512.6
(22) Date de dépôt: 20.12.1991
(51) Int. Cl.: H02H 3/06, H02H 1/04

(54) **Circuit de protection contre les court-circuits pour un interrupteur électronique**
Schutzschaltung gegen Kurzschlüsse für elektronische Schalter
Short circuit protection circuit for electronic switch

(30) Priorité: 21.12.1990 FR 9016139
(43) Date de publication de la demande: 01.07.1992
(73) Titulaire: SCHNEIDER ELECTRIC SA, 92100 Boulogne Billancourt (FR)
(72) Inventeur: Even, Stéphane, F-16000 Angoulême (FR)
(74) Mandataire: Carias, Alain

(56) Documents cités:
- EP-A- 0 185 976
- US-A- 3 602 773

## Description

La présente invention concerne d'une façon générale le domaine de la protection contre les court-circuits dans des montages à interrupteur électronique.

Il est connu, pour éviter la destruction d'un tel interrupteur par une surintensité due à un court-circuit, de déterminer le courant qui circule dans l'interrupteur et d'ouvrir ce dernier dès que la valeur du courant excède un seuil déterminé, puis après une temporisation de fermer à nouveau le composant pour le réouvrir rapidement si la surintensité persiste (voir US-A-4 602 773 qui divulgue un circuit de protection conforme au préambule de la revendication 1).

Un tel circuit de protection doit présenter préférentiellement les caractéristiques suivantes:
- afin d'éviter tout déclenchement intempestif de l'interrupteur, il ne doit pas prendre en compte de brèves surintensités susceptibles d'apparaître dans la charge, par exemple lors de l'enclenchement d'une charge capacitive ou en cas de parasites;
- afin de ne pas risquer de détériorer l'interrupteur si le court-circuit persiste, la durée des réenclenchements doit être aussi courte que possible;
- afin de ramener l'interrupteur à l'état normal le plus rapidement possible lors de la disparition de l'état de court-circuit, la temporisation doit être courte.

On constate ici une difficulté liée au fait que ces exigences sont dans leur principe antagonistes: pour ne pas prendre en compte les surintensités fugitives, la sensibilité du circuit doit être réduite, ce qui aboutit à un allongement des durées et des périodes de réenclenchement.

La présente invention vise à proposer un circuit de protection qui remplisse les conditions précitées, tout en étant extrêmement simple et économique.

Elle concerne à cet effet un circuit de protection contre les court-circuits pour un interrupteur électronique, comprenant :
- des moyens pour obtenir un paramètre électrique représentatif du courant circulant dans l'interrupteur, et
- des moyens pour engendrer une tension variable dont le sens de variation dépend de la position dudit paramètre par rapport à une référence prédéterminée,
   caractérisé en ce qu'il comprend en outre :
- des premier et second détecteurs à seuil recevant ladite tension variable et ayant des premier et second seuils, respectivement, le second seuil correspondant à une tension plus élevée que le premier seuil,
- un moyen à mémoire relié aux premier et second détecteurs à seuil pour ouvrir et fermer l'interrupteur lorsque la tension variable franchit le second ou le premier seuil, respectivement, en sortant de l'intervalle défini par lesdits seuils.

Avec un tel circuit, le second seuil (U1+U2) est atteint seulement lorsque le paramètre électrique (VRM) franchit la référence prédéterminée (U0) pendant une certaine durée, pour ainsi assurer une immunité vis-à-vis des parasites.

Plus précisement, l'interrupteur est ouvert seulement au franchissement du second seuil par la tension variable à partir d'une valeur située à l'extérieur dudit intervalle, c'est-à-dire si le paramètre excède la référence pendant une première durée prédéterminée, tandis que, pendant que persiste le court-circuit, l'interrupteur électronique est refermé pendant une seconde durée prédéterminée, limitée à la durée de franchissement de l'intervalle du premier vers le second seuil par la tension variable et inférieure à la première durée.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est un schéma d'un circuit de protection selon la présente invention, et
les figures 2 et 3 sont des chronogrammes illustrant le fonctionnement du circuit de la figure 1 dans deux situations différentes.

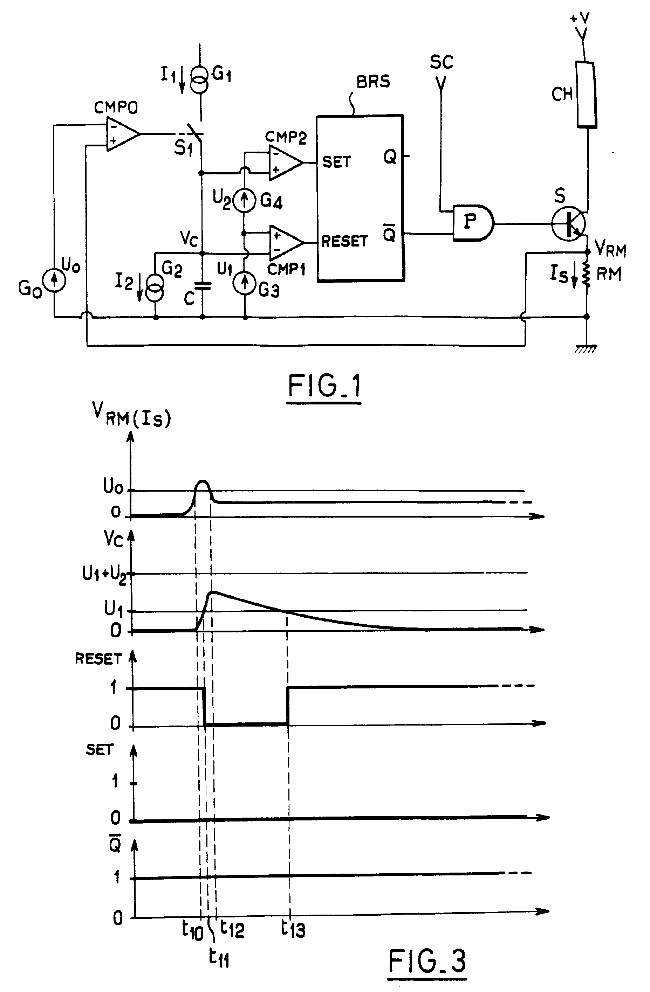

En référence tout d'abord à la figure 1, on a représenté un interrupteur électronique S qui doit être protégé contre les court-circuits. L'interrupteur est associé à une charge CH. Bien que l'on ait illustré pour S un transistor NPN, il peut bien entendu s'agir de tout composant capable de remplir cette fonction, et notamment un transistor bipolaire ou MOS, un thyristor, etc...

La base de S est commandée par un circuit de commande approprié (non illustré) délivrant sur une entrée du circuit un signal de commande SC appliqué, comme on le verra plus loin, sur ladite base.

Le circuit de protection comprend une résistance de mesure RM branchée entre l'émetteur de S et la masse. L'émetteur de S est par ailleurs relié à l'entrée positive d'un premier comparateur CMP0, dont l'entrée négative est reliée à un générateur G0 d'une tension constante de référence U0.

La sortie de CMP0 commande un interrupteur électronique S1 qui est monté entre une source G1 de courant constant I1 et une première borne d'un condensateur C. La seconde borne de C est reliée à la masse. Aux bornes de C est montée une deuxième source G2 de courant constant I2. La borne positive de C est reliée d'une part à l'entrée négative d'un deuxième comparateur CMP1 et d'autre part à l'entrée positive d'un troisième comparateur CMP2. On désigne par VC la tension sur la borne positive de C. Entre l'entrée positive de CMP1 et la masse est monté un générateur G3 d'une tension constante U1. Entre ladite entrée positive de CMP1 et l'entrée négative de CMP2 est monté un générateur G4 d'une tension constante U2.

La sortie de CMP1 est reliée à l'entrée de réarmement RESET d'une bascule à inversion ou bascule RS, désignée par BRS, tandis que la sortie de CMP2 est reliée à l'entrée d'armement ou de positionnement SET de cette bascule.

La bascule RS possède deux sorties complémentaires Q et Q̅, la sortie Q̅ étant appliquée à une première entrée d'une porte ET désignée par P. L'autre entrée de P reçoit le signal de commande SC de l'interrupteur S. La sortie de P est appliquée à la base de l'interrupteur S.

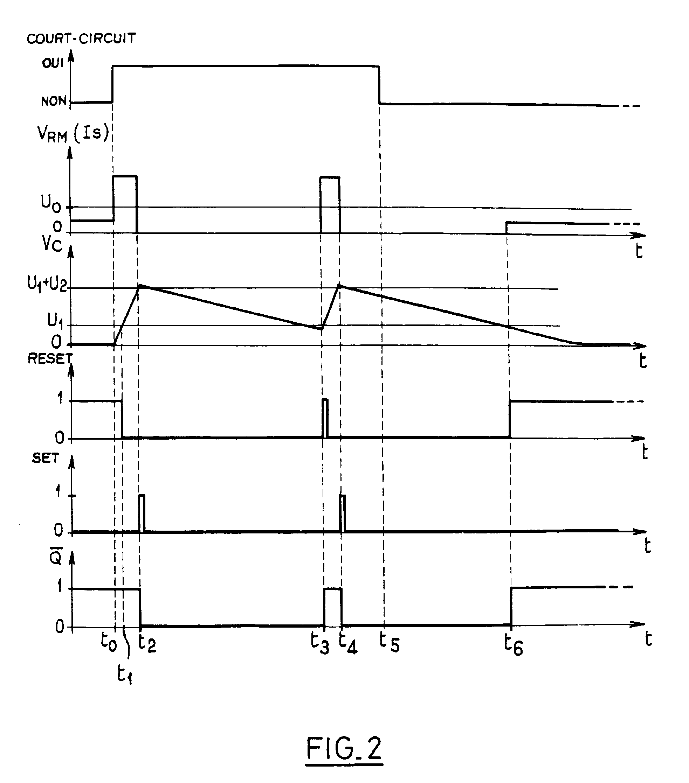

On va maintenant décrire le fonctionnement de ce circuit en référence à la figure 2, puis à la figure 3.

Sur la figure 2, lorsque le courant IS qui circule dans l'interrupteur à protéger est normal, la tension aux bornes de RM, proportionnelle à ce courant et notée VRM, est inférieure à la référence de tension U0 du comparateur CMP0. Il en résulte que S1 est ouvert. Le condensateur C est à l'état déchargé, grâce à la présence du générateur de courant G2, et les tensions appliquées à la borne négative de CMP1 et à la borne positive de CMP2 sont nulles.

Les entrées RESET et SET de la bascule sont donc respectivement à "1" (niveau logique haut) et à "0" (niveau logique bas).

En conséquence, la sortie Q̅ est au niveau logique haut, et les signaux de commande de S transitent donc par la porte ET sans altération, pour ouvrir ou fermer S comme souhaité.

Dès qu'un courant excessif circule dans S (instant t0), VRM devient supérieure à la référence U0. Il en résulte que la sortie de CMP0 passe au niveau haut, ce qui ferme l'interrupteur S1 et provoque la charge de C par le générateur G1 du courant I1. La tension VC croît donc avec une pente déterminée par les valeurs de C et de I1.

Lorsque VC dépasse le premier seuil U1 (instant t1), alors l'entrée RESET de la bascule passe au niveau logique bas, ce qui met fin à l'inhibition de la bascule. La sortie Q̅ restant au même niveau, le courant continue à passer dans S, S1 reste fermé et C continue à se charger, VC continuant donc à augmenter. Lorsque VC vient à dépasser le second seuil U1+U2 (instant t2), l'entrée SET passe à "1", ce qui fait passer au niveau "0" la sortie Q̅. Il en résulte que la tension de base de S est annulée et ce dernier cesse de conduire.

La tension à l'entrée positive de CMP0 passe donc à zéro, l'interrupteur S1 s'ouvre et C se décharge via le générateur de courant G2 avec le courant I2.

VC diminue alors, franchit rapidement dans le sens descendant le seuil U1+U2 pour remettre à zéro l'entrée SET, et au bout d'un certain temps franchit également dans le sens descendant le seuil U1 (instant t3). L'entrée RESET repasse alors à "1", ce qui a pour effet d'appliquer un "1" à la porte P et de rendre l'interrupteur S à nouveau passant.

Dans ce cas précis, le court-circuit existe encore, si bien que le courant qui se rétablit dans S est tel que VRM est immédiatement supérieure à U0. Par le processus décrit plus haut, C se recharge donc à nouveau et VC croît donc à nouveau de U1 jusqu'à U1+U2 (instant t4), ce qui a pour effet d'amener à nouveau l'entrée SET à "1" pour annuler par la sortie Q̅ et la porte P la tension de base de S. Entre t4 et t6 on assiste au même phénomène qu'entre t2 et t3. Mais à un instant t5 antérieur à t6, le court-circuit a disparu si bien qu'à t6, lorsque S se remet à conduire par passage de la sortie Q̅ au niveau "1", le courant qui traverse S est normal et la tension VRM est inférieur à U0. S1 reste donc ouvert et VC va donc poursuivre sa décroissance jusqu'à zéro, tandis que le signal RESET, passé à "1" à t6, reste à ce niveau pour désactiver la bascule BRS.

On observe sur la figure 2 que, pendant que le court-circuit dans la charge subsiste, l'excursion de VC est limitée à l'intervalle [U1,U1+U2], ce qui, pour des pentes de charge et de décharge données du condensateur, permet d'une part de limiter les temps de conduction de S pendant que le court-circuit subsiste (entre t3 et t4), et donc de minimiser les risques de détérioration du composant, et d'autre part d'accroître la cadence à laquelle s'effectuent les ouvertures/fermetures successives du composant dans cette même situation, pour ainsi ramener la commande du composant à l'état normal le plus rapidement possible une fois que le court-circuit a disparu.

La figure 3 illustre le cas où le courant dans l'interrupteur à protéger dépasse la valeur normale seulement temporairement, s'agissant d'une simple surintensité provisoire liée par exemple au comportement de la charge (par exemple lors de l'enclenchement d'une charge capacitive).

A l'instant t10, VRM franchit vers le haut la référence U0, ce qui ferme S1 et charge C. VC augmente donc et franchit U1 à l'instant t11. L'entrée RESET passe alors de "1" à "0". Mais à l'instant t12, avant que VC n'ait pu atteindre le seuil U1+U2, le courant dans l'interrupteur S diminue déjà, ce qui conduit VRM à franchir U0 dans le sens descendant. S1 s'ouvre alors, C se décharge et VC diminue. A l'instant t13, VC franchit le seuil U1 dans le sens descendant et l'entrée RESET repasse à "1", VC poursuivant ensuite sa décroissance jusqu'à zéro.

On note que l'entrée SET de la bascule est restée à tout instant au niveau "0", si bien que la sortie Q̅ est restée à "1" et que l'interrupteur est resté commandé normalement via la porte P par l'entrée de commande.

Concrètement, le circuit de la présente invention présente un temps de surcharge autorisé, pendant lequel le courant peut franchir le seuil correspondant à U0 sans provoquer de déclenchement, qui est égal à C.(U1+U2)/I1.

Ainsi, le circuit de protection selon la présente invention permet d'effectuer une discrimination entre un accroissement de courant, prolongé, dû à un court-circuit, et un accroissement de courant temporaire dû a une surintensité ou surcharge ne nécessitant pas d'amener l'interrupteur hors de conduction.

Il est à noter que le temps de surcharge autorisé, correspondant au temps de montée de VC entre 0 et U1+U2, est supérieur à la durée (intervalle de temps t4-t3) pendant laquelle l'interrupteur est refermé pendant qu'un court-circuit subsiste. Ainsi l'invention permet de diminuer cette durée de refermeture sans compromettre la qualité de l'immunité aux surintensités fugitives.

Selon une variante de réalisation, non illustrée, afin d'améliorer encore la discrimination entre les états de court-circuit et de surintensité fugitive, on peut prévoir d'appliquer la tension VRM à deux comparateurs ayant des valeurs de référence U0 et U′0 différentes, ces comparateurs permettant la charge de C avec des valeurs de courant différentes, et plus précisément avec un courant plus faible pour le seuil de tension le plus bas. Dans ce cas, on peut laisser la charge enclenchée si une surintensité qui n'est pas due à un court-circuit franchit seulement le seuil le plus bas, même pendant une durée prolongée, car la vitesse de montée de VC est plus faible.

Dans la pratique, le circuit de la figure 1 peut avantageusement être réalisé sous forme intégrée, seuls les composants RM et C, et bien entendu le composant à protéger, pouvant être extérieurs. Dans ce cas, par un choix approprié de la valeur de C, on détermine à la fois la fréquence du cycle de protection pendant court-circuit et le temps de surintensité autorisé sans déclenchement.

Par ailleurs, les tensions U1 et U1+U2 ainsi que les courants I1, I2 peuvent être choisis comme souhaité lors de la conception du circuit. On a constaté qu'un circuit dans lequel le rapport entre U1+U2 et U1 était d'environ 3 constituait un bon compromis entre la fréquence du cycle de protection et l'immunité du circuit aux surintensités fugitives. En outre, I1 et I2 déterminant respectivement les pentes de croissance et de décroissance de la tension VC, leur rapport peut être choisi par exemple de l'ordre de grandeur de 60, ce qui donne un rapport cyclique d'environ 1/60 pour le cycle de protection en court-circuit et limite bien les temps de conduction de l'interrupteur pendant un état de court-circuit.

Bien entendu, la présente invention n'est nullement limitée à la forme de réalisation décrite ci-dessus et représentée sur les dessins, mais l'homme de l'art saura y apporter toute variante ou modification dans le cadre des revendications ci-jointes.

La présente invention, comme on l'a indiqué plus haut, s'applique à la protection d'interrupteurs ou de commutateurs électroniques de natures quelconques. Elle peut être utilisée notamment dans des détecteurs inductifs de présence ou de proximité, cette application n'étant bien entendu aucunement limitative.

## Revendications

1. Circuit de protection contre les court-circuits pour un interrupteur électronique (S), comprenant :
- des moyens (RM) pour obtenir un paramètre électrique (VRM) représentatif du courant circulant dans l'interrupteur, et
- des moyens (CMP0, S1, G1, G2, C) pour engendrer une tension variable (VC) dont le sens de variation dépend de la position dudit paramètre par rapport à une référence prédéterminée (U0),
caractérisé en ce qu'il comprend en outre :
- des premier et second détecteurs à seuil (CMP1, CMP2) recevant ladite tension variable et ayant des premier et second seuils (U1, U1+U2), respectivement, le second seuil correspondant à une tension plus élevée que le premier seuil,
- un moyen à mémoire (BRS) relié aux premier et second détecteurs à seuil pour ouvrir et fermer l'interrupteur lorsque la tension variable franchit le second ou le premier seuil, respectivement, en sortant de l'intervalle défini par lesdits seuils,
le second seuil (U1+U2) étant atteint seulement lorsque le paramètre électrique (VRM) franchit la référence prédéterminée (U0) pendant une certaine durée, pour ainsi assurer une immunité vis-à-vis des parasites.

2. Circuit selon la revendication 1, caractérisé en ce que les moyens pour engendrer une tension variable comprennent un détecteur à seuil (CMP0) comparant le paramètre (VRM) à la référence (U0), un interrupteur (S1) commandé par ledit détecteur à seuil, un condensateur (C) et des moyens (G1, G2) pour charger et décharger le condensateur, la tension variable (VC) étant prise sur une borne du condensateur.

3. Circuit selon la revendication 2, caractérisé en ce que les moyens pour charger et décharger le condensateur comprennent respectivement un premier et un second générateurs de courant (G1, G2), le premier générateur de courant délivrant un courant (I1) sensiblement supérieur à celui (I2) délivré par le second générateur de courant, de manière à avoir un rapport cyclique faible entre les phases de fermeture et d'ouverture de l'interrupteur électronique pendant l'existence d'un court-circuit.

4. Circuit selon l'une des revendications 1 à 3, caractérisé en ce que les moyens à mémoire comprennent une bascule à réarmement-armement (BRS) recevant sur une entrée de réarmement (RESET) la sortie du premier détecteur à seuil (CMP1) et sur une entrée d'armement (SET) la sortie du second détecteur à seuil (CMP2).

5. Circuit selon l'une des revendications 1 à 4, caractérisé en ce qu'il est prévu une porte logique (P) recevant sur une première entrée un signal de commande (SC) de l'interrupteur électronique (S) et sur une seconde entrée la sortie du moyen à mémoire (BRS), et dont la sortie est reliée à une entrée de commande de l'interrupteur électronique (S).

6. Circuit selon la revendication 5, caractérisé en ce que la porte logique (P) est une porte ET.

## Patentansprüche

1. Schutzschaltung zum Schutz eines elektronischen Schalters (S) vor Kurzschlüssen mit
- Mitteln (RM) zum Bestimmen eines typischen elektrischen Parameters (VRM) für den in dem Schalter fließenden Strom und
- Mitteln (CMP0, S1, G1, G2, C) zum Erzeugen einer veränderlichen Spannung (VC), deren Veränderungsrichtung von der Stellung des o.a. Parameters in Bezug auf eine vorgegebene Bezugsspannung (U0) abhängt,
**dadurch gekennzeichnet**, **daß** sie weiterhin
- einen ersten und einen zweiten Schwellendetektor (CMP1, CMP2) besitzt, die die o.a. veränderliche Spannung abtasten und jeweils einen ersten bzw. zweiten Schwellenwert (U1, U1+U2) aufweisen, wobei der zweite Schwellenwert einer höheren Spannung entspricht als der erste,
- Datenspeicherungsmittel (BRS) besitzt, die an den ersten und den zweiten Detektor angeschlossen sind, um den Schalter zu öffnen bzw. zu schließen, wenn die veränderliche Spannung die zweite Schwelle überschreitet bzw. die erste Schwelle unterschreitet, indem diese Spannung außerhalb des Bereichs zwischen den beiden Schwellen läuft,
wobei die zweite Schwelle (U1+U2) erst erreicht wird, wenn der elektrische Parameter (VRM) die vorgegebene Bezugsspannung (U0) eine bestimmte Zeit lang überschreitet, um somit die Festigkeit der Schutzschaltung vor Störströmen zu gewährleisten.

2. Schutzschaltung nach Patentanspruch 1, dadurch gekennzeichnet, daß die Mittel zum Erzeugen einer veränderlichen Spannung ein Schwellendetektor (CMP0) durch Vergleichen des Parameters (VRM) mit der Bezugsspannung (U0), einen von dem Schwellendetektor (CMP0) gesteuerten Schalter (S1), einen Kondensator (C) sowie Mittel (G1, G2) zum Auf- und Entladen des Kondensators besitzt, wobei die veränderliche Spannung (VC) an einer Klemme des Kondensators abgegriffen wird.

3. Schutzschaltung nach Patentanspruch 2, dadurch gekennzeichnet, daß die Mittel zum Auf- und Entladen des Kondensators je eine erste und zweite Stromquelle (G1, G2) besitzen, wobei die erste Stromquelle einen Strom (I1) liefert, der deutlich stärker ist als der von der zweiten Stromquelle gelieferte Strom (I2), sodaß bei anstehendem Kurzschluß ein niedriges Verhältnis zwischen Schließ- und Öffnungsdauer des elektronischen Schalters (S) besteht.

4. Schutzschaltung nach Patentanspruch 1 bis 3, dadurch gekennzeichnet, daß die Datenspeicherungsmittel eine Kippschaltung für Wiedereinschalten-Einschalten (BRS) besitzen, die am Eingang für Wiedereinschalten (RESET) die Ausgabe des ersten Mittels zur Erkennung von Schwellen (CMP1) und am Eingang für Einschalten (SET) die Ausgabe des zweiten Schwellendetektors (CMP2) erhält.

5. Schutzschaltung nach Patentanspruch 1 bis 4, dadurch gekennzeichnet, daß ein logisches Tor (P) vorgesehen ist, das an einem ersten Eingang ein Steuersignal (SC) für den elektronischen Schalter (S) und an einem zweiten Eingang die Ausgabe des Datenspeicherungsmittels (BRS) empfängt und dessen Ausgang an einen Steuereingang des elektronischen Schalters (S) angeschlossen ist.

6. Schutzschaltung nach Patentanspruch 5, dadurch gekennzeichnet, daß das logische Tor (P) ein UND-Tor ist.

## Claims

1. Short circuit protection circuit for an electronic switch (S) comprising:
- means (RM) for obtaining an electrical parameter (VRM) representative of the current passing through the switch and,
- means (CMP0, S1, G1, G2, C) for generating a variable voltage (VC), the direction of variation of which depends on the value of the said parameter with respect to a predetermined reference (U0), characterised in that it also comprises:
- first and second threshold detectors (CMP1, CMP2) receiving the said variable voltage and with first and second thresholds (U1, U1 +U2) respectively, the second threshold corresponding a higher voltage than the first threshold,
- a memory means (BRS) connected to the first and second threshold detectors for opening and close the switch when the variable voltage crosses the second or first threshold, respectively, and comes outside the interval defined by said threshold, the second thresholde (U1+U2) being reached only when the electrical parameter (VRM) crossess the predetermined reference (U0) for a given time, in order to provide immunity to interferences.

2. Circuit according to claim 1, wherein the means for generating a variable voltage include a threshold detector (CMP0) comparing the parameter (VRM) with the reference (U0), a switch (S1) controlled by the said threshold detector, a capacitor (C) and means (G1, G2) of charging and discharging the capacitor, the variable voltage (VC) being taken on one of the capacitor terminals.

3. Circuit according to claim 2, wherein the means of charging and discharging the capacitor include a first and second current generator (G1, G2) respectively, the first current generator outputting a current (I1) significantly greater than the current (I2) output by the second current generator, so as to give a low cyclic ratio between closing and opening phases of the electronic switch while a short circuit exists.

4. Circuit according to one of claims 1 to 3, wherein the memory means includes a reset-set flip-flop (BRS) receiving the output from the first threshold detector (CMP1) on a RESET input, and the output from the second threshold detector (CMP2) on a SET input.

5. Circuit according to one of claims 1 to 4, wherein it includes a logical gate (P) receiving a control signal (SC) for the electronic switch (S) on a first input, and the output from the memory means (BRS) on a second input, and the output of which is connected to a control input of the electronic switch (S).

6. Circuit according to claim 5, wherein the logical gate (P) is an AND gate.
